(19) Europäisches Patentamt / European Patent Office / Office européen des brevets

(11) **EP 4 715 758 A1**

(12) **EUROPEAN PATENT APPLICATION**
published in accordance with Art. 153(4) EPC

(43) Date of publication:
25.03.2026 Bulletin 2026/13

(21) Application number: 24810876.3

(22) Date of filing: 07.05.2024

(51) International Patent Classification (IPC):
*G06V 10/82* (2022.01)   *G06F 18/2413* (2023.01)
*G06V 10/764* (2022.01)   *G06V 20/20* (2022.01)

(52) Cooperative Patent Classification (CPC):
G06F 18/2413; G06Q 10/063; G06V 10/764;
G06V 10/82; G06V 20/20

(86) International application number:
PCT/JP2024/017002

(87) International publication number:
WO 2024/241868 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.05.2023 JP 2023082875

(71) Applicant: PANASONIC INTELLECTUAL
PROPERTY
MANAGEMENT CO., LTD.
Kadoma-shi, Osaka 571-0057 (JP)

(72) Inventor: ISONISHI, Chris
Osaka 571-0057 (JP)

(74) Representative: Eisenführ Speiser
Patentanwälte Rechtsanwälte PartGmbB
Gollierstraße 4
80339 München (DE)

(54) **IMAGE PROCESSING DEVICE**

(57) An image input unit (21) obtains an input image including visualized data. A determination unit (22) classifies the input image into one of a plurality of classes to obtain a classification result. A determination unit (23) determines a partial region of the input image, the partial region accounting for determining the classification result. An image generation unit (24) highlights the partial region in the input image to generate an output image. A display device (16) outputs the output image.

*FIG. 2*

## Description

TECHNICAL FIELD

The present disclosure relates to an image processing apparatus, an image processing method, and a program.

BACKGROUND ART

In recent years, the use of digital transformation and big data has attracted attention, and there is a need for data visualization that visualizes various data in various formats, for example, as graphs, charts, timelines, or diagrams.
For example, Patent Documents 1 and 2 disclose a display device using a heat map, and the like.

CITATION LIST

PATENT DOCUMENTS

Patent Document 1: International Publication No. WO 2021/009819 A1
Patent Document 2: Japanese Patent No. JP 6868981 B2

SUMMARY OF INVENTION

TECHNICAL PROBLEM

For the purpose of work improvement or the like, it is required to analyze and understand visualized data or numerical data. However, in many sites facing shortage of human resources, it is difficult to obtain human resources specialized in analysis. Even if an inexperienced person is assigned to data analysis, he/she can not know where to focus on the data, and it may waste time. In addition, it is difficult to read meaningful information from data without specialized knowledge about a subject represented by the data. Insufficient experience or knowledge may result in incorrect conclusions. Therefore, it is required to support analysis of visualized data or numerical data by a person with insufficient experience or knowledge.
The present disclosure provides an image processing apparatus, an image processing method, and a program capable of supporting analysis of visualized data or numerical data by a person with insufficient experience or knowledge.

SOLUTION TO PROBLEM

According to an aspect of the present disclosure, an image processing apparatus is provided with: an image input unit, a first determination unit, a second determination unit, an image generation unit, and an image output unit. The image input unit obtains an input image including visualized data. The first determination unit classifies the input image into one of a plurality of classes to obtain a classification result. The second determination unit determines a partial region of the input image, the partial region accounting for determining the classification result. The image generation unit highlights the partial region in the input image to generate an output image. The image output unit outputs the output image.

ADVANTAGEOUS EFFECTS OF INVENTION

According to one aspect of the present disclosure, it is possible to support analysis of visualized data or numerical data by a person with insufficient experience or knowledge.

BRIEF DESCRIPTION OF DRAWINGS

Fig. 1 is a block diagram illustrating a configuration of a system including an image processing apparatus 1 according to a first embodiment;
Fig. 2 is a functional block diagram for explaining operations of the image processing apparatus 1 of Fig. 1;
Fig. 3 is a diagram illustrating a configuration of a determination unit 22 of Fig. 2;
Fig. 4 is a schematic diagram for explaining operations of the determination unit 22 of Fig. 2;
Fig. 5 is a flowchart illustrating an image generation process executed by a processor 11 of Fig. 1;
Fig. 6 is a diagram illustrating a first exemplary input image 51 to be processed by the image processing apparatus 1 of Fig. 1;
Fig. 7 is a diagram illustrating reference data 52 obtained by a determination unit 23 when the input image 51 of Fig. 6 is processed;
Fig. 8 is a diagram illustrating a heat map 53 generated based on reference data 52 of Fig. 7;
Fig. 9 is a diagram illustrating a heat map 54 generated based on the heat map 53 of Fig. 8, and resized in accordance with the input image 51;
Fig. 10 is a diagram illustrating an output image 55 generated by overlaying the input image 51 of Fig. 1 with the heat map 54 of Fig. 9;
Fig. 11 is a diagram illustrating a second exemplary input image 61 to be processed by the image processing apparatus 1 of Fig. 1;
Fig. 12 is a diagram illustrating an exemplary output image 62 corresponding to the input image 61 of Fig. 11;
Fig. 13 is a diagram illustrating a third exemplary input image 71 to be processed by the image processing apparatus 1 of Fig. 1;
Fig. 14 is a diagram illustrating an exemplary output image 72 corresponding to the input image 61 of Fig. 13;

Fig. 15 is a diagram illustrating a fourth exemplary input image 81 to be processed by the image processing apparatus 1 of Fig. 1;

Fig. 16 is a diagram illustrating an exemplary output image 82 corresponding to the input image 61 of Fig. 15;

Fig. 17 is a block diagram illustrating a configuration of a system including an image processing apparatus 1A according to a second embodiment;

Fig. 18 is a functional block diagram for explaining operations of the image processing apparatus 1A of Fig. 17;

Fig. 19 is a functional block diagram for explaining operations of an image processing apparatus according to a third embodiment;

Fig. 20 is a diagram illustrating an exemplary manufacturing site to be analyzed by the image processing apparatus according to the third embodiment;

Fig. 21 is a flowchart illustrating an image generation process executed by a processor 11B of Fig. 19;

Fig. 22 is a flowchart illustrating a subroutine of step S12 (bottleneck detection process) of Fig. 21;

Fig. 23 is a chart showing operations of an exemplary manufacturing site to be analyzed by the image processing apparatus according to the third embodiment;

Fig. 24 is a diagram illustrating an exemplary image generated by the image processing apparatus according to the third embodiment;

Fig. 25 is a block diagram illustrating a configuration of a system including an image processing apparatus 1C according to a fourth embodiment; and

Fig. 26 is a flowchart illustrating a manufacturing apparatus monitoring process executed by a processor 11C of Fig. 25.

DESCRIPTION OF EMBODIMENTS

Hereinafter, embodiments will be described in detail with reference to the drawings as appropriate. However, excessively detailed explanation may be omitted. For example, detailed explanation of well-known matters may be omitted, and redundant explanations on substantially the same configuration may be omitted. This is to avoid the unnecessary redundancy of the following description, and to facilitate understanding by those skilled in the art. Note that components denoted by the same reference signs have the same functions in various embodiments.

It is to be noted that the inventor(s) intends to provide the accompanying drawings and the following description so that those skilled in the art can sufficiently understand the present disclosure, and does not intend to limit subject matters recited in the claims.

[FIRST EMBODIMENT]

[CONFIGURATION OF FIRST EMBODIMENT]

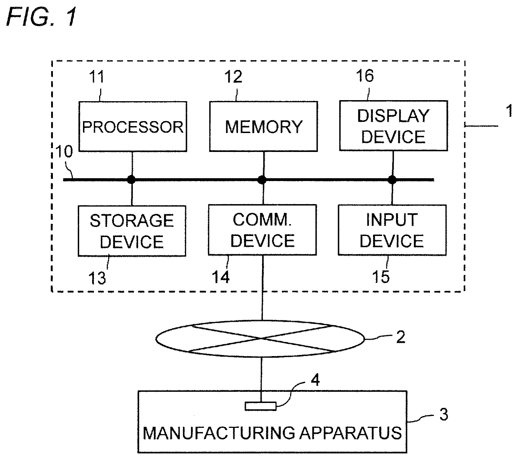

Fig. 1 is a block diagram illustrating a configuration of a system including an image processing apparatus 1 according to a first embodiment. The system of Fig. 1 includes an image processing apparatus 1, a communication line 2, a manufacturing apparatus 3, and a sensor 4. The image processing apparatus 1 is connected to one or more sensors 4 provided in the manufacturing apparatus 3, via the communication line 2. The manufacturing apparatus 3 manufactures some product. The sensor 4 obtains measured values indicating operation conditions of the manufacturing apparatus 3, for example, whether the manufacturing apparatus 3 is in not-in-operation, normal operation, changeover, setup, or emergency stop. The image processing apparatus 1 generates an image including visualized data indicating temporal variations in the operation conditions of the manufacturing apparatus 3, based on the measured values obtained by the sensor 4. The image processing apparatus 1 further determines whether the manufacturing apparatus 3 is in a normal state or an abnormal state, based on the generated image.

The image processing apparatus 1 is provided with a bus 10, a processor 11, a memory 12, a storage device 13, a communication device 14, an input device 15, and a display device 16. The processor 11 controls entire operations of the image processing apparatus 1. The memory 12 temporarily stores programs and data necessary for the operations of the image processing apparatus 1. The storage device 13 is a nonvolatile storage medium that stores the programs necessary for the operations of the image processing apparatus 1. The communication device 14 is communicably connected to the sensor 4 via the communication line 2. The input device 15 receives user inputs for controlling the operations of the image processing apparatus 1. The input device 15 includes, for example, a keyboard and a pointing device. The display device 16 displays information related to the operations conditions of the manufacturing apparatus 3. The processor 11, the memory 12, the storage device 13, the communication device 14, the input device 15, and the display device 16 are connected to each other via the bus 10.

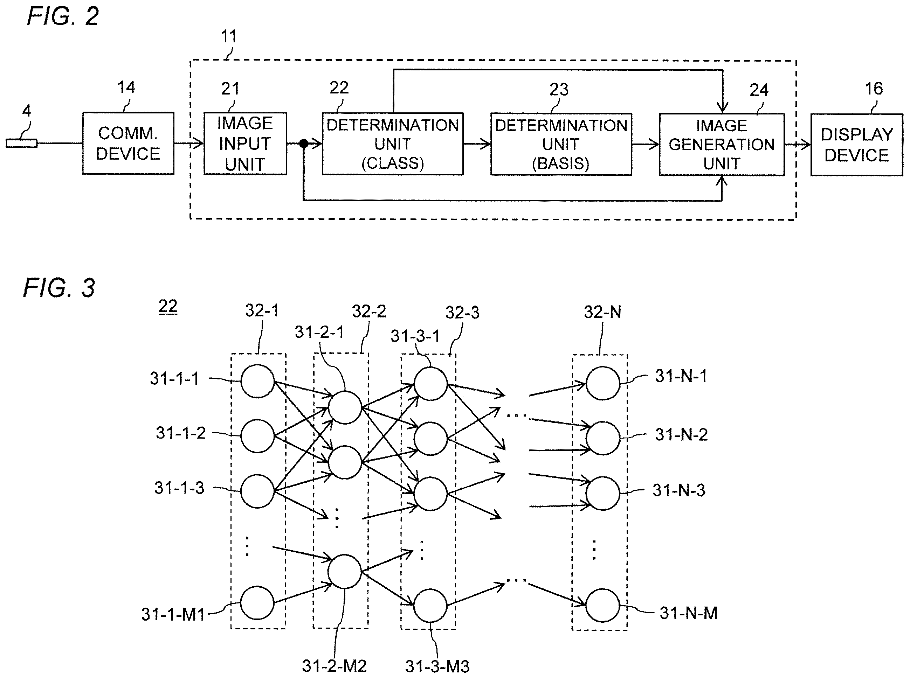

Fig. 2 is a functional block diagram for explaining operations of the image processing apparatus 1 of Fig. 1. The processor 11 executes the programs stored in the storage device 13 to operate as an image input unit 21, a determination unit 22, a determination unit 23, and an image generation unit 24.

The image input unit 21 obtains an image including visualized data. Here, the visualized data includes data visually representing numerical information, including, for example, graphs, charts, timelines, diagrams, or the like. In the example of Fig. 2, the image input unit 21 obtains measured values from the sensor 4, and generates an image including visualized data based on the measured values. In this example, the visualized data is a graph showing temporal variations in the operation conditions of the manufacturing apparatus 3. Furthermore, the image input unit 21 may read an image including visualized data from the storage device 13, or from a storage device external to the image processing apparatus 1. Furthermore, the image input unit 21 may generate an image including visualized data based on data stored in the storage device 13, or based on data stored in a storage device external to the image processing apparatus 1. **In** the present specification, an image obtained by the image input unit 21 is referred to as an "input image".

The determination unit 22 classifies the input image into one of a plurality of classes to obtain a classification result. The plurality of classes may include a normal state and an abnormal state of the manufacturing apparatus 3. Further, the plurality of classes may include a normal state and a plurality of abnormal states, the plurality of abnormal states being of different levels from each other. The determination unit 22 may be trained in advance using machine learning to classify the input image into the plurality of classes.

The determination unit 23 obtains reference data from the determination unit 22, and determines a partial region(s) of the input image based on the reference data, the partial region(s) accounting for determining the classification result. This partial region(s) is a region including an important feature in the input image, the feature having significantly affected determination of the classification result. The determination unit 23 operates as an Explainable Artificial Intelligence (AI), and thus, the user can understand the basis of classification by the determination unit 22.

The image generation unit 24 highlights the partial region(s) in the input image to generate an output image. For example, the image generation unit 24 may generate a heat map, indicating the degree of influence on determination of the classification result per each partial region of the input image, and overlay the input image with the heat map to highlight partial regions. Furthermore, the image generation unit 24 may overlay the input image with the classification result of the input image.

The output image is displayed on the display device 16. Furthermore, the output image may be outputted to a device external to the image processing apparatus 1 via the communication device 14.

Fig. 3 is a diagram illustrating a configuration of the determination unit 22 of Fig. 2. The determination unit 22 may be configured as a neural network. The neural network of Fig. 3 is provided with: nodes 31-1-1 to 31-1-M1 of an input layer 32-1, nodes 31-2-1 to 31-2-M2 of an intermediate layer 32-2, nodes 31-3-1 to 31-3-M3 of an intermediate layer 32-3, ..., and nodes 31-N-1 to 31-N-M of an output layer 32-N. The nodes 31-N-1 to 31-N of the output layer 32-N correspond to the plurality of classes into which the input image is classified, respectively. The neural network is trained in advance using machine learning such that when pixel values of an input image are inputted to the input layer 32-1, only a node of the output layer 32-N corresponding to the class of the input image is "1", and the other nodes of the output layer 32-N is "0". The nodes of the intermediate layer 32-2 are weighted in advance using machine learning so as to output "1" or "0" for a captured image inputted thereto.

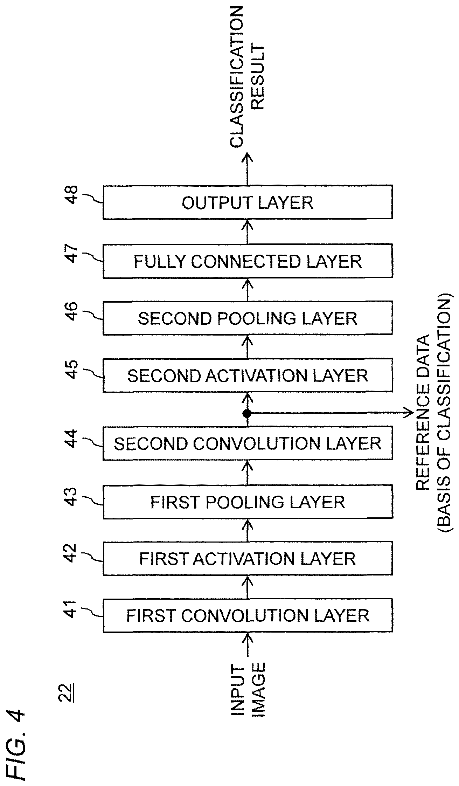

Fig. 4 is a schematic diagram for explaining operations of the determination unit 22 of Fig. 2. The determination unit 22 may be configured to operate as the convolutional neural network illustrated in Fig. 4. In this case, the determination unit 22 is provided with a first convolution layer 41, a first activation layer 42, a first pooling layer 43, a second convolution layer 44, a second activation layer 45, a second pooling layer 46, a fully connected layer 47, and an output layer 48. An input image is inputted to the first convolution layer 41, and a classification result is outputted from the output layer 48. The first convolution layer 41 extracts features from the input image. The first activation layer 42 is provided subsequent to the first convolution layer 41, and serves as a threshold function for removing noise and leaving only strong values among the features extracted by the first convolution layer 41. The first pooling layer 43 is provided subsequent to the first activation layer 42, and performs downsampling by which the spatial resolution of the feature map is reduced. The second convolution layer 44 is provided subsequent to the first pooling layer 43, and extracts features related to a wider region based on the features aggregated per each local region in the first pooling layer 43. The second activation layer 45 is provided subsequent to the second convolution layer 44, and serves as a threshold function for removing noise and leaving only strong values among the features extracted by the second convolution layer 44. The second pooling layer 46 is provided subsequent to the second activation layer 45, and performs downsampling by which the spatial resolution of the feature map is reduced. The fully connected layer 47 is provided subsequent to the second pooling layer 46, and serves to further combine features aggregated in the second pooling layer. In the convolution layer most remote from the first convolution layer 41, that is, the second convolution layer 44 in this example, a map is determined as to in which part of the image each local pattern having learned by the kernel mainly exists. The data of the second convolution layer 44 is obtained as reference data by the determination unit 23. The reference data indicates a degree of influence on determination of the classification result per each pixel, and is used to determine a partial region(s) of the input image, the partial region(s) accounting for determining the classification result.

The determination unit 22 may operate as, for example, a convolutional neural network of Gradient-weighted Class Activation Mapping (Grad-CAM).

Fig. 4 illustrates a case where the determination unit 22 is provided with two sets of convolution layers, activation layers, and pooling layers. However, the determination unit 22 may be provided with three or more sets of convolution layers, activation layers, and pooling layers.

The determination unit 22 is implemented by some hardware, software, or a combination thereof so as to operate as the convolutional neural network of Fig. 4.

[OPERATIONS OF FIRST EMBODIMENT]

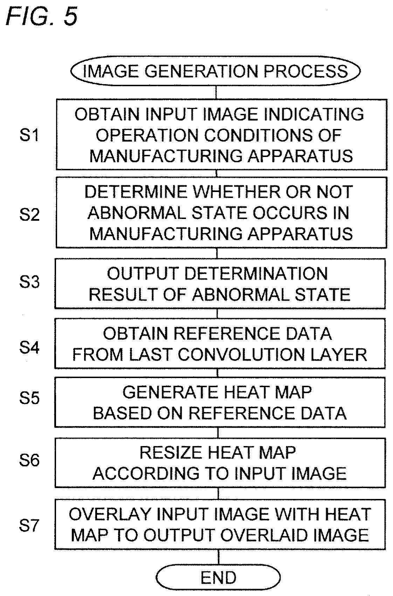

Fig. 5 is a flowchart illustrating an image generation process executed by the processor 11 of Fig. 1.

In step S1, the processor 11 obtains an input image indicating temporal variations in operation conditions of the manufacturing apparatus 3.

In step S2, the processor 11 processes the input image using the convolutional neural network to determine whether or not an abnormal state has occurred in the manufacturing apparatus 3.

In step S3, the processor 11 outputs the determination result of the abnormal state to the display device 16.

In step S4, the processor 11 obtains reference data from the last convolution layer of the convolutional neural network. The reference data includes a plurality of rectangularly arranged pixels, each pixel including a numerical value indicating a degree of influence on determination of the determination result.

In step S5, the processor 11 converts the numerical value of each pixel of the reference data into a predetermined color or pattern to generate a heat map.

In step S6, the processor 11 resizes the heat map according to the input image.

In step S7, the processor 11 overlays the input image with the heat map, and outputs the overlaid image.

When the determination unit 22 operates as a convolutional neural network of Grad-CAM, the processor 11 may operate as follows.

    (1) Classifying an input image into one of a plurality of classes to obtain a classification result.
    (2) Calculating a loss function value for this case.
    (3) Calculating gradients from the last convolution layer to the loss function.
    (4) Calculating an average of gradients of the last convolution layer to obtain weights, removing noise, and generating a heat map.
    (5) Overlaying the input image with the heat map.

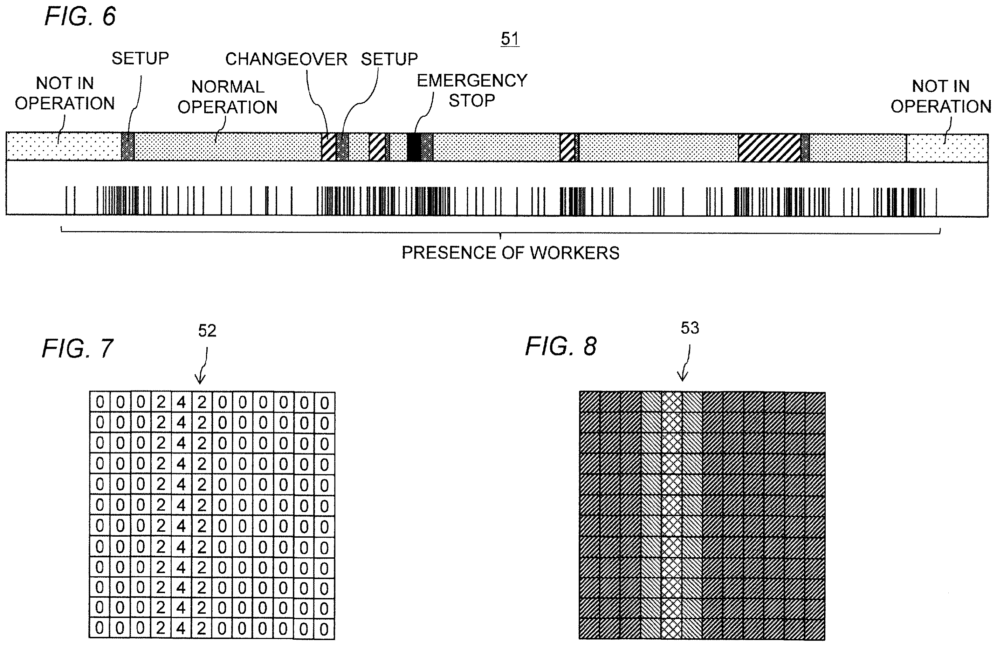

The processor 11 may display the input image, the determination result, and the heat map together on the display device 16, as described later with reference to Figs. 6 to 16.

Fig. 6 is a diagram illustrating a first exemplary input image 51 to be processed by the image processing apparatus 1 of Fig. 1. The input image 51 includes a graph illustrating temporal variations in operation conditions of the manufacturing apparatus 3, including the not-in-operation, normal operation, changeover, setup, and emergency stop of the manufacturing apparatus 3. In the example of Fig. 6, the sensor 4 includes a motion sensor, and the input image 51 further indicates whether or not a worker(s) exists near the manufacturing apparatus 3.

In the case of processing the input image 51 including the graph indicating the temporal variations of the operation conditions of the manufacturing apparatus 3, as illustrated in Fig. 6, the determination unit 22 may be trained in advance using machine learning by a person with sufficient knowledge and experience regarding the operation conditions of the manufacturing apparatus 3, in accordance with one or more of the following criteria.

-    If "emergency stop" occurs in the manufacturing apparatus 3, the manufacturing apparatus 3 is in an abnormal state, and if "emergency stop" does not occur in the manufacturing apparatus 3, the manufacturing apparatus 3 is in a normal state.
-    If a time taken for "changeover" of the manufacturing apparatus 3 is equal to or more than a threshold, the manufacturing apparatus 3 is in an abnormal state, and if a time taken for "changeover" of the manufacturing apparatus 3 is shorter than the threshold, the manufacturing apparatus 3 is in a normal state.
-    If "changeover" of the manufacturing apparatus 3 occurs at an unscheduled time point, the manufacturing apparatus 3 is in an abnormal state, and if "changeover" of the manufacturing apparatus 3 does not occur at an unscheduled time point, the manufacturing apparatus 3 is in a normal state.
-    If a time taken for "setup" of the manufacturing apparatus 3 is equal to or more than a threshold, the manufacturing apparatus 3 is in an abnormal state, and if a time taken for "setup" of the manufacturing apparatus 3 is shorter than the threshold, the manufacturing apparatus 3 is in a normal state.
-    If "setup" of the manufacturing apparatus 3 occurs at an unscheduled time point, the manufacturing apparatus 3 is in an abnormal state, and if "setup" of the manufacturing apparatus 3 does not occur at an unscheduled time point, the manufacturing apparatus 3 is in a normal state.

Fig. 7 is a diagram illustrating reference data 52 obtained by the determination unit 23 when the input image 51 of Fig. 6 is processed. The reference data 52 includes a plurality of rectangularly arranged pixels, each pixel including a numerical value indicating a degree of influence on determination of the determination result. The larger the numerical value of the pixel, the greater the influence on determination of the determination result.

Fig. 8 is a diagram illustrating a heat map 53 generated based on the reference data 52 of Fig. 7. The heat map 53 is generated by converting the numerical value of each pixel of the reference data 52 into a predetermined color or pattern.

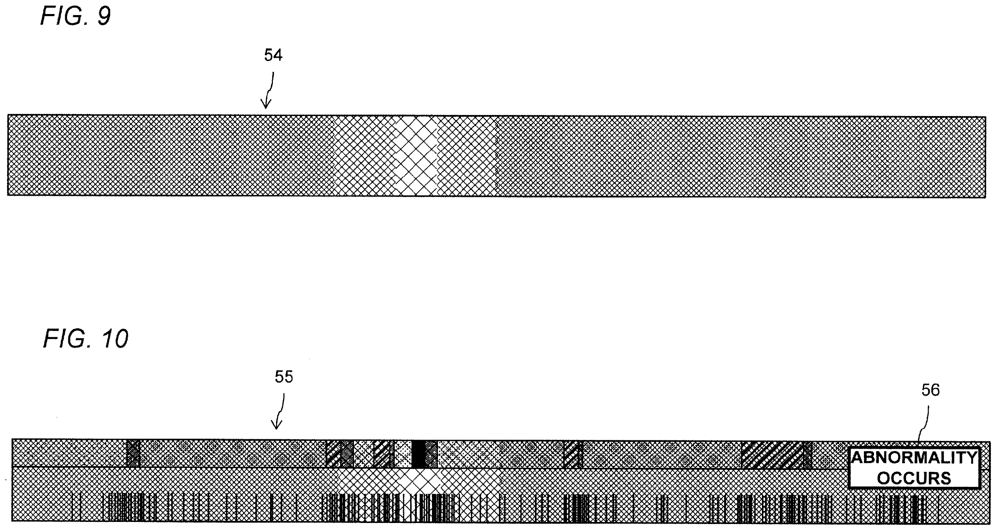

Fig. 9 is a diagram illustrating a heat map 54 generated based on the heat map 53 of Fig. 8, and resized in accordance with the input image 51. In order to transform the heat map 53, for example, the CV2.resize function of OpenCV-Python may be used.

Fig. 10 is a diagram illustrating an output image 55 generated by overlaying the input image 51 of Fig. 1 with the heat map 54 of Fig. 9. Fig. 10 illustrates a case where it is determined that the manufacturing apparatus 3 is in an abnormal state due to occurrence of "emergency stop" of the manufacturing apparatus 3, and a partial region indicating "emergency stop" in the input image 51 is highlighted. In the heat map 54, the vicinity of the partial region indicating "emergency stop" is brighter than the other portions, and thus, highlighted. The output image 55 may include an alert 56 indicating a determination result.

The partial region(s) of the input image, accounting for determining the classification result, may be highlighted in an arbitrary format instead of the heat map, such as a box, an arrow, or the like.

According to the present embodiment, the image processing apparatus 1 outputs the determination result indicating whether the manufacturing apparatus 3 is in a normal state or an abnormal state, and highlights a partial region(s) of the input image, the partial region(s) accounting for determining the determination result, thus supporting analysis of the graph by a person with insufficient experience or knowledge. By using the image processing apparatus 1 according to the present embodiment, it is possible to make analysis errors less likely to occur.

According to the present embodiment, the user can easily understand which part of the graph is important and should be noticed. Since it is possible to understand at a glance where to notice the graph, it is possible to largely reduce the burden and person-hours for an analyst(s).

An analyst with sufficient knowledge and experience can extract meaningful information from a complicated graph, such as "a worker shows a suspicious behavior in this time zone", or "a manufacturing machine tends to meet a problem". By training the determination unit 22 in advance using machine learning based on such an analyst's know-hows, it is possible to prevent personalization of analysis, and it is expected to lead to development of human resources capable of analyzing complicated graphs.

[MODIFICATIONS OF FIRST EMBODIMENT]

The image processing apparatus 1 is may be configured to process an input image including visualized data in other formats, not limited to the input image 51 illustrated in Fig. 6.

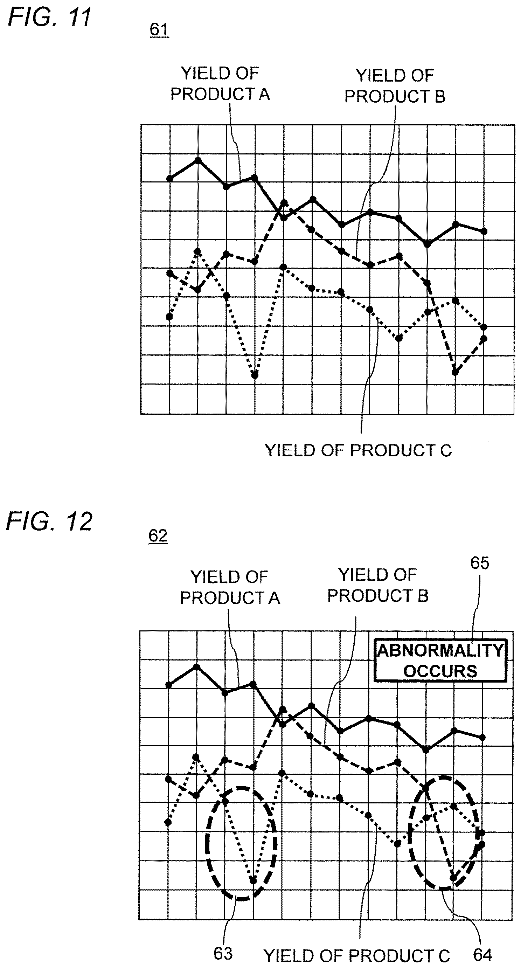

Fig. 11 is a diagram illustrating a second exemplary input image 61 to be processed by the image processing apparatus 1 of Fig. 1. The input image 61 includes, for example, a graph showing temporal variations in daily yields of products A to C. In this case, the image processing apparatus 1 is connected to a plurality of sensors 4, and the sensors 4 detect the yields of the products A to C, respectively. The determination unit 22 is trained in advance using machine learning to classify whether each yield is in a normal state or an abnormal state.

Fig. 12 is a diagram illustrating an exemplary output image 62 corresponding to the input image 61 of Fig. 11. The output image 62 includes highlights 63 and 64 indicating sudden decreases in the yields as abnormal states. The output image 62 may include an alert 65 indicating a determination result.

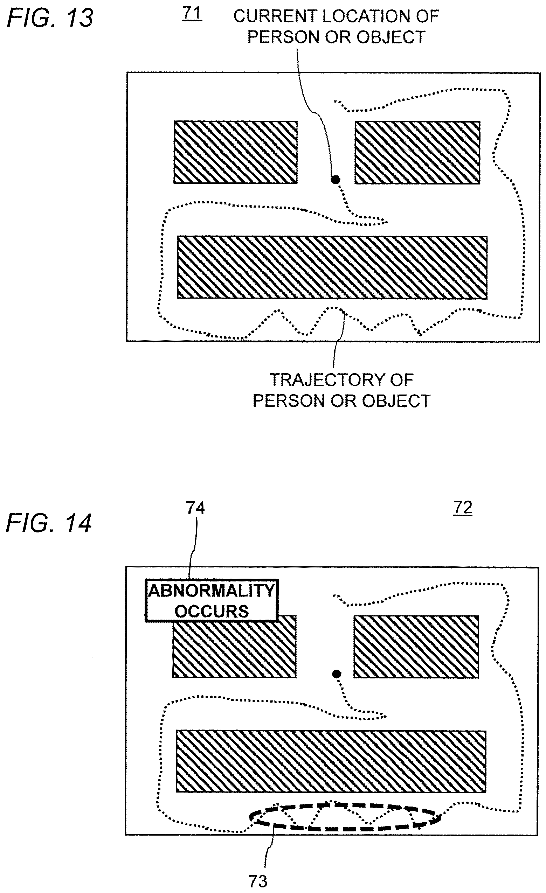

Fig. 13 is a diagram illustrating a third exemplary input image 71 to be processed by the image processing apparatus 1 of Fig. 1. The input image 71 includes a map indicating temporal variations in a location of a person or an object. In this case, the image processing apparatus 1 is connected to one or more sensors 4, and the sensor 4 detects the location of the person or the object. The determination unit 22 is trained in advance using machine learning to classify whether the location of the person or the object is in a normal state or an abnormal state.

Fig. 14 is a diagram illustrating an exemplary output image 72 corresponding to the input image 61 of Fig. 13. The output image 72 includes a highlight 73 indicating meandering of the person or the object as an abnormal state. The output image 72 may include an alert 74 indicating a determination result.

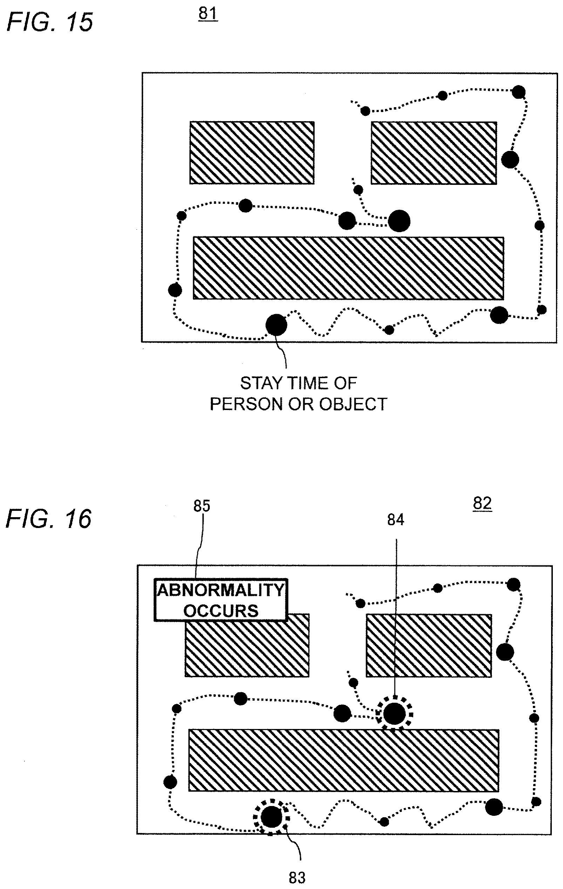

Fig. 15 is a diagram illustrating a fourth exemplary input image 81 to be processed by the image processing apparatus 1 of Fig. 1. The input image 81 includes a map indicating a stay time of a person or an object per location. A diameter of each circle indicates a length of the stay time. In this case, the image processing apparatus 1 is connected to one or more sensors 4, and the sensors 4 detect a location and a stay time of the person or the object. The determination unit 22 is trained in advance using machine learning to classify whether the stay time of the person or the object per location is in a normal state or an abnormal state.

Fig. 16 is a diagram illustrating an exemplary output image 82 corresponding to the input image 61 of Fig. 15. The output image 82 includes highlights 83 and 84 indicating that a person or an object stays at a location over a threshold or more, as an abnormal state. The output image 82 may include an alert 85 indicating a determination result.

By processing the images as illustrated in Figs. 6 to 16, it is possible to appropriately understand conditions of a site, including a manufacturing site or a distribution site. By processing the input image 51 including the visualized data indicating the temporal variations of the operation conditions of the manufacturing apparatus 3, and by processing the input image 61 including the visualized data indicating the temporal variations of the yields, it is possible to easily understand the conditions of the site related to the manufacturing apparatus 3. In addition, by processing the input image 71 including the visualized data indicating the temporal variations of the location of the person, for example, a worker, and by processing the input image 81 including the graph indicating the stay time of the person per location, it is possible to easily understand the conditions of the site related to the person. In addition, by processing the input image 71 including the visualized data indicating the temporal variations of the location of the object, for example, a product to be manufactured, and by processing the input image 81 including the visualized data indicating the stay time of the object per location, it is possible to easily understand the conditions of the site related to the object.

The image processing apparatus 1 may be configured to process any other input image, not limited to the images illustrated in Figs. 6 to 16. The input image may include a graph(s) in any other format, such as a bar graph, a pie chart, or the like. The input image may include, for example, a graph indicating temporal variations in stock price, frequency, or power consumption. The input image may include a chart in an arbitrary format, may be an image in which a map is overlaid with data, or may be a timeline in an arbitrary format. The input image may be an image obtained by converting information, such as numerical values or statistical data, into a visual representation. In this case, the determination unit 22 is trained in advance using machine learning to classify the input image into a plurality of classes according to the content of the input image.

[ADVANTAGEOUS EFFECTS AND OTHERS OF FIRST EMBODIMENT]

The image processing apparatus 1 of the first embodiment is provided with: an image input unit 21, a first determination unit 22, a second determination unit 23, an image generation unit 24, and an image output unit. The image input unit 21 obtains an input image including visualized data. The first determination unit 22 classifies the input image into one of a plurality of classes to obtain a classification result. The second determination unit 23 determines a partial region of the input image, the partial region accounting for determining the classification result. The image generation unit 24 highlights the partial region in the input image to generate an output image. The image output unit outputs the output image.

With such a configuration, it is possible to support analysis of visualized data by a person with insufficient experience or knowledge.

According to the image processing apparatus 1 of the first embodiment, the first determination unit 22 may be provided with a convolutional neural network including a plurality of convolution layers, the convolutional neural network being trained using machine learning to classify the input image into the plurality of classes. The second determination unit 23 may determine the partial region based on data of a last convolution layer of the convolutional neural network.

With such a configuration, it is possible to classify the input image, and also present the basis of the classification.

According to the image processing apparatus 1 of the first embodiment, the visualized data may include data visually representing numerical information.

With such a configuration, it is possible to process the visualized data including numerical information.

According to the image processing apparatus 1 of the first embodiment, the visualized data may include information indicating conditions of a site including a manufacturing site or a distribution site.

With such a configuration, it is possible to represent the conditions of the site, such as manufacturing, distribution, or the like, as the visualized data, and visualize a problem(s) in the site.

According to the image processing apparatus 1 of the first embodiment, the visualized data may include a graph representing one of temporal variations in operation conditions of a machine, temporal variations in a yield of a product, temporal variations in a location of a person or an object, and a stay time of a person or an object per location.

With such a configuration, it is possible to represent the conditions of the site, such as manufacturing, distribution, or the like, as the visualized data, and visualize a problem(s) in the site.

According to the image processing apparatus 1 of the first embodiment, the plurality of classes may include a normal state and an abnormal state, or include a normal state and a plurality of abnormal states, the plurality of abnormal states being of different levels from each other.

With such a configuration, it is possible to appropriately understand the conditions of the site, such as manufacturing, distribution, or the like.

According to the image processing apparatus 1 of the first embodiment, the image input unit 21 may obtain a measured value from a sensor, and generate the input image including the visualized data based on the measured value.

With such a configuration, it is possible to appropriately and easily understand the conditions of the site, such as manufacturing, distribution, or the like.

According to the image processing apparatus 1 of the first embodiment, the image output unit may output the classification result.

With such a configuration, the user can understand the classification result and the basis for determining the classification result.

According to the image processing method of the first embodiment, the image processing method is provided for processing an input image including visualized data by a computer. The image processing method includes: obtaining the input image; classifying the input image into one of a plurality of classes to obtain a classification result; determining a partial region of the input image, the partial region accounting for determining the classification result; highlighting the partial region in the input image to generate an output image; and outputting the output image.

With such a configuration, it is possible to support analysis of visualized data by a person with insufficient experience or knowledge.

According to the program of the first embodiment, the program including instructions executed by a processor implemented in a computer is provided. The computer processes an input image including visualized data. The instructions causing the processor to: obtain the input image; classify the input image into one of a plurality of classes to obtain a classification result; determine a partial region of the input image, the partial region accounting for determining the classification result; highlight the partial region in the input image to generate an output image; and output the output image.

With such a configuration, it is possible to support analysis of visualized data by a person with insufficient experience or knowledge.

[SECOND EMBODIMENT]

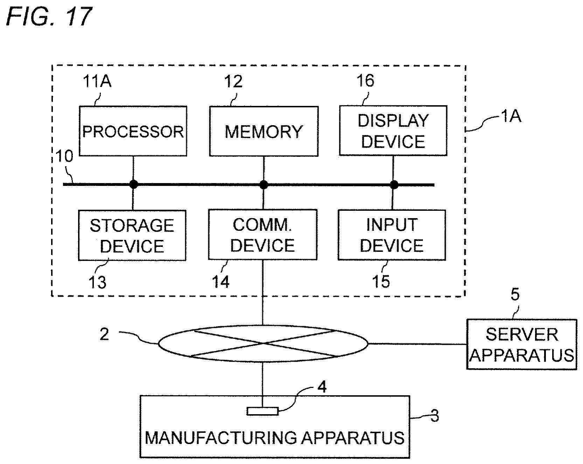

Fig. 17 is a block diagram illustrating a configuration of a system including an image processing apparatus 1A according to a second embodiment. The system of Fig. 17 includes an image processing apparatus 1A, a communication line 2, a manufacturing apparatus 3, a sensor 4, and a server apparatus 5. For explanation purpose, the image processing apparatus 1A is provided with a processor 11A, instead of the processor 11 of Fig. 1. The image processing apparatus 1A is connected to the server apparatus 5 via the communication line 2. The server apparatus 5 includes a convolutional neural network trained using machine-learning to classify an input image into a plurality of classes. The image processing apparatus 1A obtains a classification result and reference data from the server apparatus 5, instead of internally generating the classification result and the reference data.

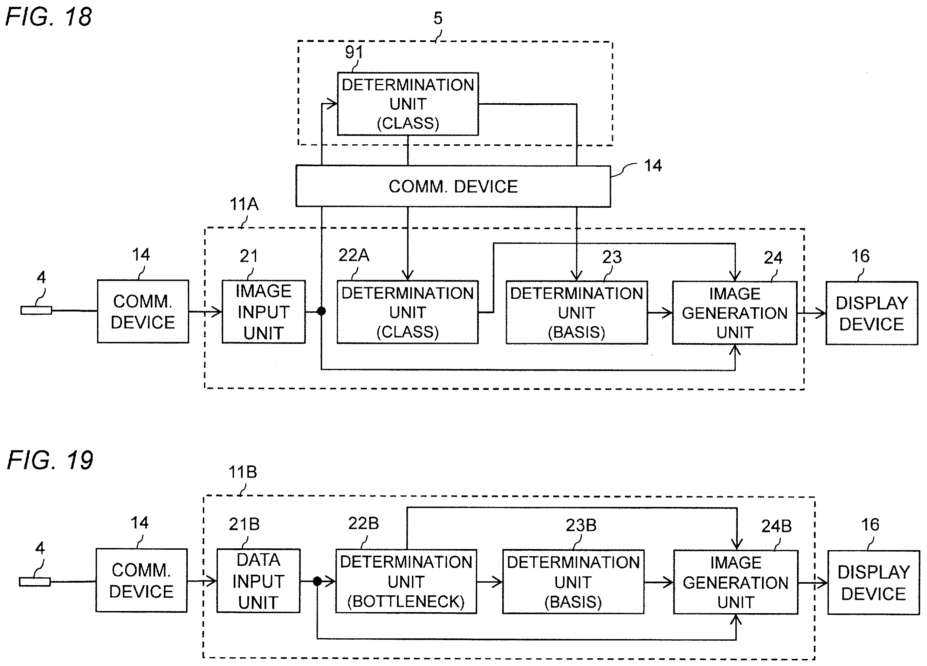

Fig. 18 is a functional block diagram for explaining operations of the image processing apparatus 1A of Fig. 17.

The processor 11A executes programs stored in the storage device 13 to operate as an image input unit 21, a determination unit 22A, an determination unit 23, and an image generation unit 24. The input image obtained by the image input unit 21 is transmitted to the server apparatus 5.

The server apparatus 5 is provided with a determination unit 91 configured in a manner similar to that of the determination unit 22 of Fig. 2. In a manner similar to that of the determination unit 22 of Fig. 2, the determination unit 91 is trained in advance using machine learning to classify the input image into a plurality of classes.

The determination unit 22A obtains a classification result from the determination unit 91, the classification result having been generated by classifying the input image into one of the plurality of classes. The determination unit 23 obtains reference data from the determination unit 91, and determines a partial region of the input image based on the reference data, the partial region accounting for determining the classification result.

The image generation unit 24 of Fig. 18 highlights the partial region in the input image to generate an output image, in a manner similar to that of the image generation unit 24 of Fig. 2.

The image processing apparatus 1A causes the server apparatus 5 to classify the input image using the machine learning, and therefore, it is possible to reduce the processing load, the power consumption, and the program size of the image processing apparatus 1A, as compared with those of the image processing apparatus 1 of the first embodiment.

[ADVANTAGEOUS EFFECTS AND OTHERS OF SECOND EMBODIMENT]

The image processing apparatus 1A of the second embodiment may be further provided with a communication device 16 that communicates with a first external apparatus. The first external apparatus includes a server apparatus 5 provided with a convolutional neural network including a plurality of convolution layers, the convolutional neural network being trained using machine learning to classify the input image into the plurality of classes. The first determination unit 22 sends the input image to the server apparatus 5, and obtains the classification result from the server apparatus 5. The second determination unit 23 obtains data of a last convolution layer of the convolutional neural network from the server apparatus 5, and determines the partial region based on the data of the last convolution layer of the convolutional neural network.

With such a configuration, it is possible to reduce the processing load, the power consumption, and the program size of the image processing apparatus 1A, as compared with those of the image processing apparatus 1 of the first embodiment.

[THIRD EMBODIMENT]

Each of the first and second embodiments illustrates the case of determining whether the manufacturing apparatus is in a normal state or an abnormal state, based on the image including the visualized data indicating the temporal variations of the operation conditions of the manufacturing apparatus. A third embodiment will illustrate a case of identifying a bottleneck at a manufacturing site including a plurality of processes, based on numerical data indicating temporal variations in conditions of the manufacturing site.

[CONFIGURATION OF THIRD EMBODIMENT]

Fig. 19 is a functional block diagram for explaining operations of an image processing apparatus according to the third embodiment. The image processing apparatus according to the third embodiment is configured in a manner similar to that of the image processing apparatus 1 of Fig. 1. For explanation purpose, the image processing apparatus according to the third embodiment is provided with a processor 11B, instead of the processor 11 of Fig. 1. The processor 11B executes programs stored in the storage device 13 to operate as a data input unit 21B, a determination unit 21B, a determination unit 23B, and an image generation unit 24B.

The data input unit 21B obtains input data including numerical data. In the example of Fig. 19, the data input unit 21B obtains measured values from the sensor 4, and generates input data including numerical data in a certain format based on the measured values. In this example, the input data may include a start time and an end time of a work of each process in a manufacturing site including a plurality of processes. In addition, the data input unit 21B may read input data including numerical data from the storage device 13, or from a storage device external to the image processing apparatus.

The determination unit 22B classifies the input data into one of a plurality of classes to obtain a classification result. The plurality of classes may include whether or not each process in the manufacturing site is in a bottleneck state. For example, the determination unit 22B may determine whether or not a first process is in a bottleneck state, based on start times and end times of works of the first process, a second process preceding the first process, and a third process following the first process, among the plurality of processes.

The determination unit 23B obtains reference data from the determination unit 22B, and determines a partial element(s) of the input data based on the reference data, the partial element(s) accounting for determining the classification result. This partial element(s) is an important feature in the input data, the feature having significantly affected determination of the classification result.

The image generation unit 24B converts the input data into visualized data, and generates an output image including the visualized data, the classification result, and the partial element.

The output image is displayed on the display device 16. Furthermore, the output image may be outputted to a device external to the image processing apparatus 1 via the communication device 14.

[OPERATIONS OF THIRD EMBODIMENT]

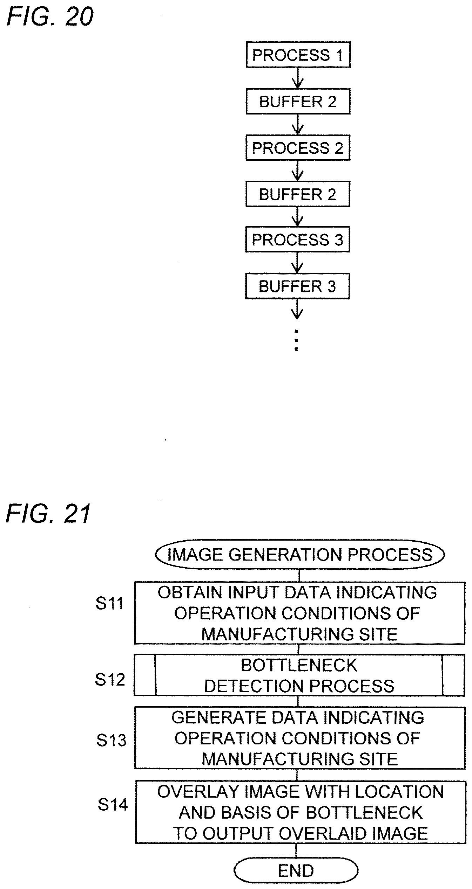

Fig. 20 is a diagram illustrating an exemplary manufacturing site to be analyzed by the image processing apparatus according to the third embodiment. As described above, the manufacturing site includes the plurality of processes, that is, process 1, process 2, process 3, .... Each process may include a separate manufacturing apparatus. A buffer 1, a buffer 2, a buffer 3, ... are provided between the processes, for primarily holding articles finished by a preceding process, before sending it to a following process.

Fig. 21 is a flowchart illustrating an image generation process executed by the processor 11B of Fig. 19.

In step S11, the processor 11B obtains input data including operation conditions of the manufacturing site, that is, the start time and the end time of the work of each process.

In step S12, the processor 11B executes a bottleneck detection process to obtain a classification result indicating whether or not each process is in a bottleneck state, and determines a partial element of the input data, the partial element accounting for determining the classification result.

In step S13, the processor 11B generates an image indicating the operation conditions of the manufacturing site.

In step S14, the processor 11B overlays the image with a location(s) and a basis of the bottleneck(s), and outputs the overlaid image.

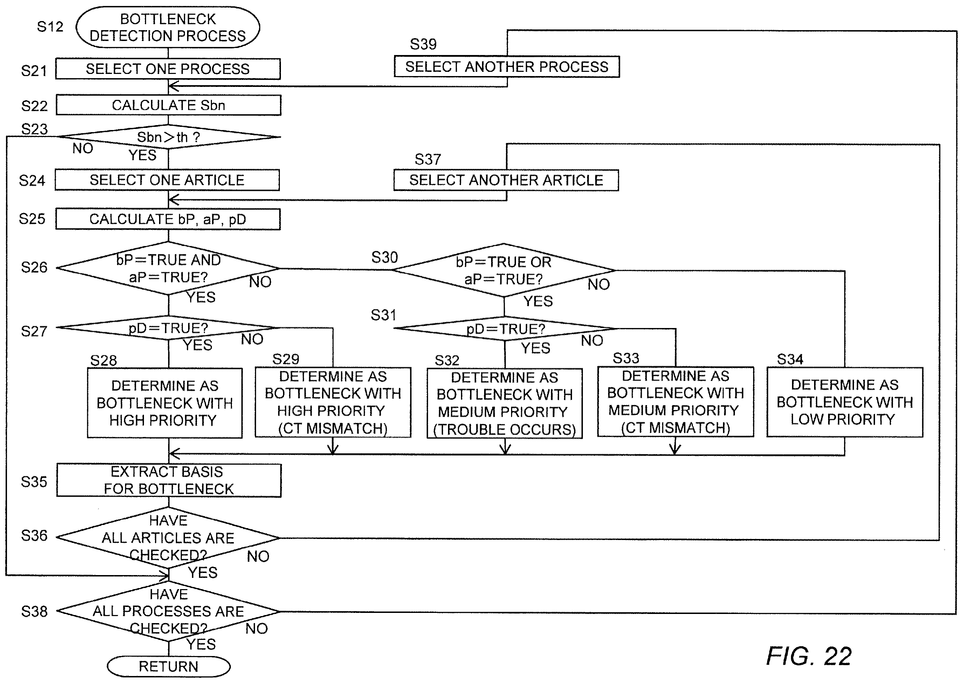

Fig. 22 is a flowchart illustrating a subroutine of step S12 (bottleneck detection process) in Fig. 21.

In step S21, the processor 11B selects one of the processes in the manufacturing site, for example, process n.

In step S22, the processor 11B calculates a bottleneck score $Sbn(n)$ of the current process n, based on start times and end times of works on a plurality of articles in the selected process n, a preceding process n - 1, and a following process n + 1. In order to calculate the bottleneck score $Sbn(n)$, for example, the processor 11B first calculates stay ratios $bst(n-1, i)$ and $bst(n, i)$ of the article in a buffer n-1 and a buffer n preceding and following the process n, respectively, using the following equations.

$$bst(n - 1, i) = (pe(n - 1, i) - ps(n, i))/T0$$

$$bst(n, i) = (pe(n, i) - ps(n + 1, i))/T0$$

Here, i denotes an identification number uniquely identifying individual articles to be processed in the processes, $pe(n - 1, i)$ denotes a time at which the work on the article i in the process n - 1 is finished, $ps(n, i)$ denotes a time at which the work on the article i in the process n is started, T0 denotes a length of an entire time of interest, $pe(n, i)$ denotes a time when the work on the article i in the process n is finished, and $ps(n + 1, i)$ denotes a time when the work on the article i in the process n + 1 is started.

Next, the processor 11B calculates a delay index $d(n, i)$ for the work on the article i in the process n, using the following equation.

$$d(n, i) = bst(n - 1, i) - bst(n, i)$$

The delay index $d(n, i)$ indicates an amount of articles accumulated upstream of the process n. Therefore, it is considered that as the delay index $d(n, i)$ increases, a more serious bottleneck has occurred.

Next, the processor 11B calculates the bottleneck score Sbn (n) using the following equation.

$$Sbn(n) = \Sigma i(\alpha \times d(n, i))$$

Here, $\alpha$ denotes a predetermined coefficient. The larger the coefficient $\alpha$, the more likely the work delay is determined to be a bottleneck, and the smaller the coefficient $\alpha$, the less likely the work delay is determined to be a bottleneck.

In step S23, the processor 11B determines whether or not the bottleneck score Sbn(n) is higher than a predetermined threshold th: if YES, the process proceeds to step S24; if NO, the process proceeds to step S38.

In step S24, the processor 11B selects one of the articles to be processed in the process n, for example, article i.

In step S25, the processor 11B calculates parameters bP(n, i), aP(n, i), and pD(n, i), based on start times and end times of works on the article i in the selected process n, the preceding process n - 1, and the following process n + 1. Here, bP(n, i) denotes whether or not the work on the article i in the process n - 1 immediately preceding the current process n has continued for a long time (that is, more than a predetermined threshold time), aP(n, i) denotes whether or not the start of the work on the article i in the process n + 1 immediately following the current process n is suspended for a long time (that is, more than a predetermined threshold time), and pD(n, i) denotes whether or not the work on the article i in the current process n has continued for a long time (that is, more than a predetermined threshold time).

In step S26, the processor 11B determines whether or not bP(n, i) = TRUE and aP(n, i) = TRUE: if YES, the process proceeds to step S27; if NO, the process proceeds to step S30.

In step S27, the processor 11B determines whether or not pD(n, i) = TRUE: if YES, the process proceeds to step S28; if NO, the process proceeds to step S29.

In step S28, the processor 11B determines that the work on the article i in the process n takes an excessively long time, and the current process n is a bottleneck to be checked with a high priority (that is, it is highly likely to be critical). In step S29, the processor 11B determines that a mismatch in a cycle time (that is, a time length from start to finish of the work on the article i) occurs among the current process n, the preceding process n - 1, and the following process n + 1, and the current process n is a bottleneck to be checked with a high priority.

In step S30, the processor 11B determines whether or not bP(n, i) = TRUE or aP(n, i) = TRUE: if YES, the process proceeds to step S31; if NO, the process proceeds to step S34.

In step S31, the processor 11B determines whether or not pD(n, i) = TRUE: if YES, the process proceeds to step S32; if NO, the process proceeds to step S33.

In step S32, the processor 11B determines that some trouble may have occurred in relation to the work on the article i in the process n, and the current process n is a bottleneck to be checked with a medium priority. The trouble includes, for example, that a worker(s) is absent, that a worker(s) is performing other works different from the work of the process n, and the like. In step S33, the processor 11B determines that a mismatch in a cycle time occurs between the current process n and the preceding or following process n - 1, n + 1, and the current process n is a bottleneck to be checked with a medium priority.

In step S34, the processor 11B determines that the current process n is a bottleneck to be checked with a low priority.

In step S35, the processor 11B extracts a basis corresponding to the detected bottleneck. The basis for the bottleneck includes, for example, the delay index d(n, i) for the work on the article i in the process n.

In step S36, the processor 11B determines whether or not the presence or absence of the bottleneck(s) has been determined for all the articles to be processed in the process n: if YES, the process proceeds to step S38; if NO, the process proceeds to step S37.

In step S37, the processor 11B selects another one of the articles to be processed in the process n, and repeats steps S25 to S36.

In step S38, the processor 11B determines whether or not the presence or absence of the bottleneck(s) has been determined for all the processes: if YES, the process proceeds to step S13 in Fig. 21; if NO, the process proceeds to step S39 in Fig. 22.

In step S39, the processor 11B selects another one of the processes in the manufacturing site, and repeats steps S22 to S38.

According to the bottleneck detection process of Fig. 22, it is possible to detect which article in which process of the manufacturing site is being processed when the bottleneck has occurred, and further, it is possible to present a basis for determining the bottleneck.

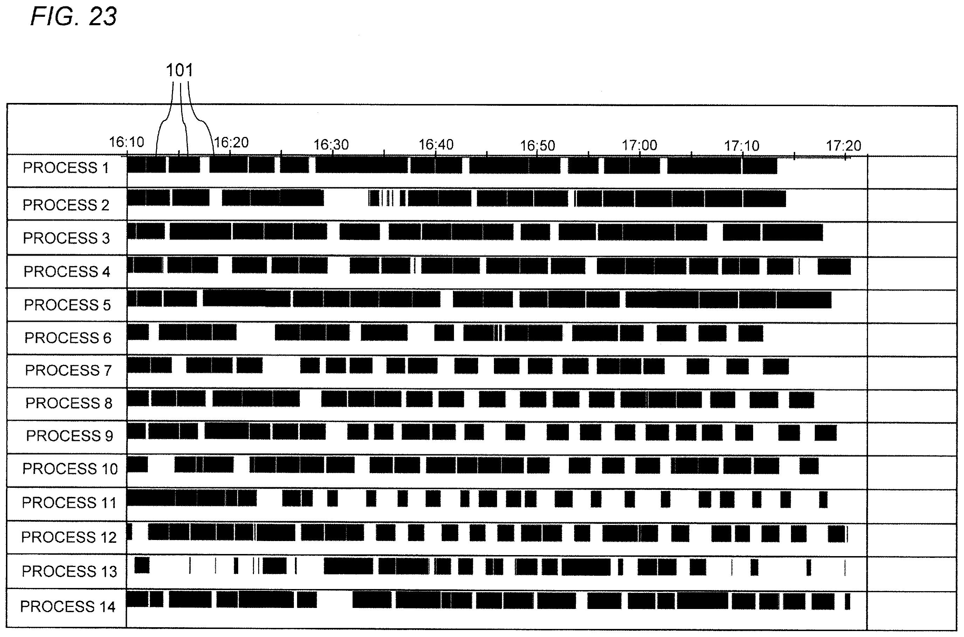

Fig. 23 is a chart illustrating operations of an exemplary manufacturing site to be analyzed by the image processing apparatus according to the third embodiment. In step S13 of Fig. 21, the processor 11B may generate a chart as illustrated in Fig. 23, as an image indicating the operation conditions of the manufacturing site. Each interval 101 of processes 1 to 14 indicates a duration from start to end of a work on one article in the process.

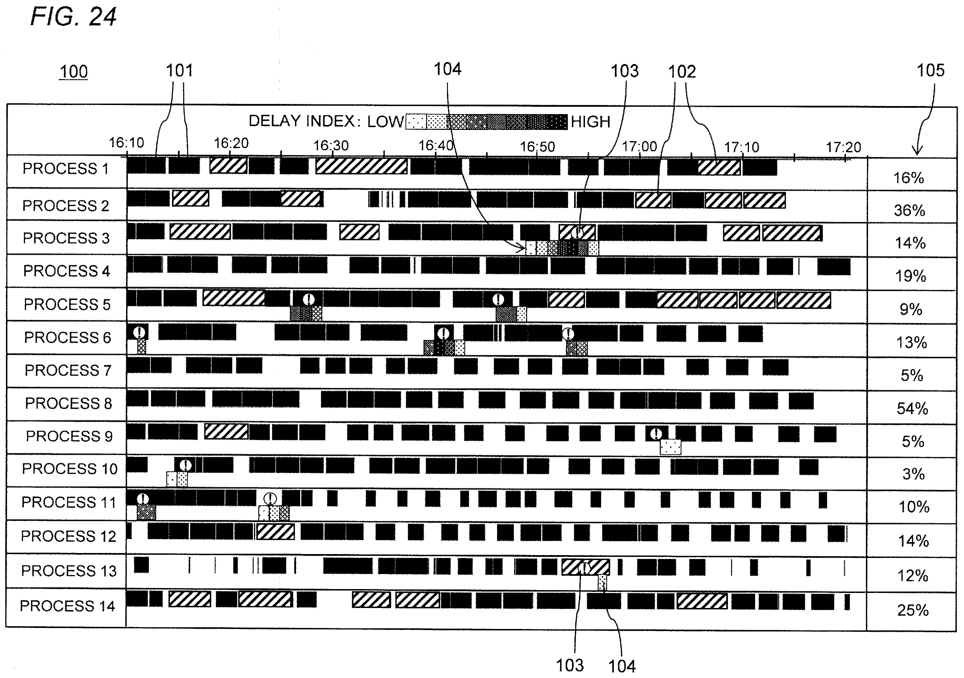

Fig. 24 is a diagram illustrating an exemplary image generated by the image processing apparatus according to the third embodiment. In each process, a threshold time is set, which indicates an upper limit time taken for executing the work of the process for one article. Intervals 101 having a time length exceeding the threshold time may be represented by a color or pattern different from that of intervals 101 having a time length equal to or less than the threshold time, and in the example of Fig. 24, such intervals are indicated by reference sign 102. Reference sign 103 indicates bottlenecks detected in steps S28, S29, S32, and S33 in Fig. 22. The display of bottlenecks detected in step S34 of Fig. 22 may be omitted. Reference sign 104 denotes delay indexes corresponding to the bottlenecks. The change in the magnitude of the delay index may be represented by different colors. Reference sign 105 indicates rooms for improvement of the works in the processes.

The delay indexes 104 are presented as partial elements of input data, the partial elements accounting for determining whether or not each process is in a bottleneck state. By displaying the delay indexes 104 near the bottlenecks 103, the user can understand the basis for detecting the bottlenecks 103.

The room for improvement IM(n) in the process n is calculated, for example, using the following equation:

$$IM(n) = (t_i(n) + t_o(n))/(p_2(n) - p_1(n)) \times 100$$

Here, $t_i(n)$ denotes the total time length of suspending the work on the article, $t_o(n)$ denotes a sum of excesses of durations of the works on the articles over the threshold time, $p_1(n)$ denotes a start time of entire operations of the process n, and $p_2(n)$ denotes a end time of entire operations of the process n.

According to the present embodiment, the image processing apparatus outputs the determination result indicating whether or not each process in the manufacturing site is in a bottleneck state, and presents a partial element(s) of the numerical data, the partial element(s) accounting for determining the determination result. thus supporting analysis of the numerical data by a person with insufficient experience or knowledge. By using the image processing apparatus according to the present embodiment, it is possible to make analysis errors less likely to occur.

[ADVANTAGEOUS EFFECTS AND OTHERS OF THIRD EMBODIMENT]

The image processing apparatus of the first embodiment is provided with: a data input unit 21B, a first determination unit 22B, a second determination unit 23B, an image generation unit 24B, and an image output unit. The data input unit 21B obtains input data including numerical data. The first determination unit 22B classifies the input data into one of a plurality of classes to obtain a classification result. The second determination unit 23B determines a partial element of the input data, the partial element accounting for determining the classification result. The image generation unit 24B converts the input data into visualized data, and generates an output image including the visualized data, the classification result, and the partial element. The image output unit outputs the output image.

With such a configuration, it is possible to support analysis of numerical data by a person with insufficient experience or knowledge.

According to the image processing apparatus of the third embodiment, the numerical data may include information indicating conditions of a manufacturing site including a plurality of processes. The plurality of classes may include whether or not each process is in a bottleneck state.

With such a configuration, it is possible to identify a bottleneck at the manufacturing site, based on the numerical data indicating the conditions of the manufacturing site.

According to the image processing apparatus of the third embodiment, the information indicating the conditions of the manufacturing site may include a start time and an end time of work of each of the processes. The first determination unit may determine whether or not the first process is in the bottleneck state, based on start times and end times of a first process, a second process preceding the first process, and a third process following the first process, among the plurality of processes.

With such a configuration, it is possible to identify a bottleneck at the manufacturing site, based on the numerical data indicating the conditions of the manufacturing site.

[FOURTH EMBODIMENT]

A fourth embodiment will illustrate a case of monitoring the manufacturing apparatus 3 using the image processing apparatus according to any one of the first to third embodiments.

[CONFIGURATION OF FOURTH EMBODIMENT]

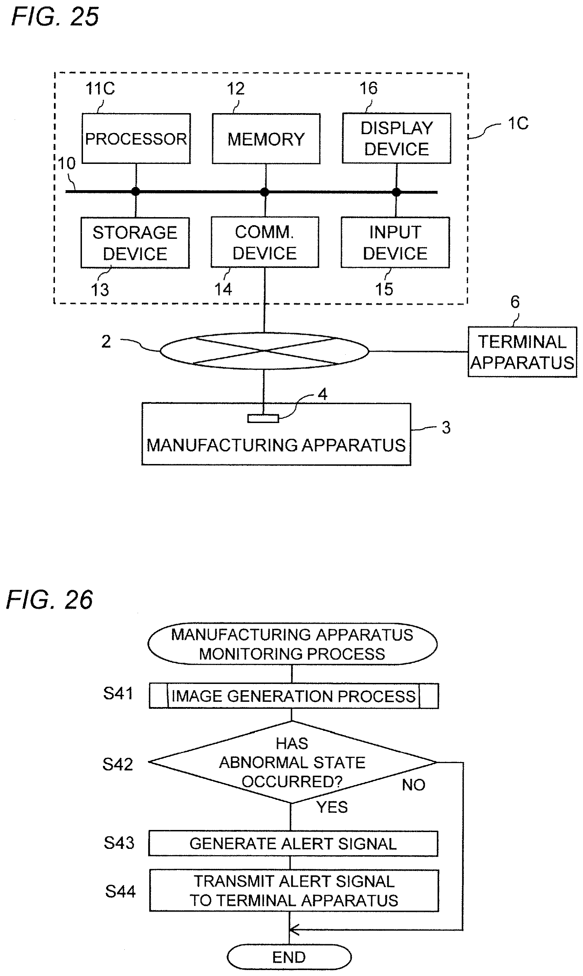

Fig. 25 is a block diagram illustrating a configuration of a system including an image processing apparatus 1C according to the fourth embodiment. The system of Fig. 25 includes the image processing apparatus 1C, a communication line 2, a manufacturing apparatus 3, a sensor 4, and a terminal apparatus 6. For explanation purpose, the image processing apparatus 1C is provided with a processor 11C, instead of the processor 11 of Fig. 1 (or the processor 11A of Fig. 17 or the processor 11B of Fig. 19). The image processing apparatus 1C is connected to the terminal apparatus 6 via the communication line 2. The terminal apparatus 6 is, for example, a personal computer or a mobile phone used by an administrator of the manufacturing apparatus 3. The terminal apparatus 6 is provided with an output device, such as a display or a speaker.

[OPERATIONS OF FOURTH EMBODIMENT]

Fig. 26 is a flowchart illustrating a manufacturing apparatus monitoring process executed by the processor 11C of Fig. 25.

In step S41, the processor 11C executes the image generation process of Fig. 5 or 21.

When the processor 11C executes the image generation process of Fig. 5, the processor 11C determines whether or not an abnormal state has occurred in the manufacturing apparatus 3, as described in connection with step S2 of Fig. 5. Further, when the processor 11C executes the image generation process of Fig. 21, the processor 11C calculates the bottleneck score $Sbn(n)$ as described in connection with step S22 of Fig. 22, and calculates the room for improvement $IM(n)$ as described in connection with Fig. 24. When the bottleneck score $Sbn(n)$ is higher than a predetermined threshold, and/or the room for improvement $IM(n)$ is higher than a predetermined threshold, the processor 11C may determine that an abnormal state has occurred in the manufacturing apparatus 3.

In step S42, the processor 11C determines whether or not an abnormal state has occurred in the manufacturing apparatus 3: if YES, the process proceeds to step S43; if NO, the process ends.

In step S43, the processor 11C generates an alert signal.

In step S44, the processor 11C transmits the alert signal to the terminal apparatus 6.

Upon receiving the alert signal, the terminal apparatus 6 notifies the administrator that the abnormal state has occurred in the manufacturing apparatus 3. As a result, the administrator can understand and analyze the occurrence of an abnormal state, and improve the works, without need to directly monitor the manufacturing apparatus 3 nearby.

[ADVANTAGEOUS EFFECTS AND OTHERS OF FOURTH EMBODIMENT]

The image processing apparatus 1C of the fourth embodiment may be further provided with a communication device 16 that communicates with a terminal apparatus 6. The first determination unit generates an alert signal based on the classification result. The communication device 16 transmits the alert signal to the terminal apparatus 6.

With such a configuration, the administrator can understand and analyze the occurrence of an abnormal state, and improve the works, without need to directly monitor the manufacturing apparatus 3 nearby.

[OTHER EMBODIMENTS]

As described above, an input image may be classified into a plurality of classes, and the plurality of classes may include, for example, a normal state and a plurality of abnormal states, the plurality of abnormal states being of different levels from each other. For example, in a case where an input image includes visualized data indicating temporal variations in operation conditions of the manufacturing apparatus 3, it may be determined that the manufacturing apparatus 3 is in "slight abnormal state", when a time taken for "changeover" is equal to or more than a first threshold, for example, several minutes, and it may be determined that the manufacturing apparatus 3 is in "severe abnormal state" when a time taken for "changeover" is equal to or more than a larger second threshold, for example, several hours. Different levels of abnormal states may be highlighted using different colors or patterns. According to abnormal states at different levels, the image processing apparatus 1 may generate messages, such as "watch", "caution", and "alert", for example.

Upon obtaining a classification result of an input image, the image processing apparatus may enlarge and display a vicinity of a partial region of the input image on the display device 16, the partial region accounting for determining the classification result. As a result, the user can more clearly understand the basis for determining the classification result.

When processing the input image 51 of Fig. 6, the image processing apparatus may determine whether the manufacturing apparatus 3 is in a normal state or an abnormal state, in consideration of presence of a worker(s), as well as the operation conditions of the manufacturing apparatus 3. For example, even if a time taken for "changeover" is shorter than the threshold, it may be determined that the manufacturing apparatus 3 is in an abnormal state, when no worker exists near the manufacturing apparatus 3. Further, even if a time taken for "setup" is equal to or more than the threshold, it may be determined that the manufacturing apparatus 3 is in a normal state, when a worker(s) exists near the manufacturing apparatus 3.

The image processing apparatus according to any one of the first and second embodiments is also applicable to a case where one input image includes a plurality of graphs, charts, and/or diagrams. For example, the image processing apparatus according to any one of the first and second embodiments is also applicable to a case where an input image includes a plurality of graphs indicating operation conditions of a plurality of manufacturing apparatuses included in one factory, respectively. Even in a case where the input image includes the plurality of graphs and the like, the determination unit 22 is trained in advance using machine learning in a manner similar to that of the input image including one graph.

The determination unit 23 may obtain reference data from other layers instead of the last convolution layer of the convolutional neural network, the other layers including data indicating a degree of influence on determination of the classification result per each pixel, the data being available to determine a partial region of the input image, the partial region accounting for determining the classification result.

During operations of the image processing apparatus 1, the determination unit 22 may be additionally trained using machine learning based on input images and user inputs.

[SUMMARY OF EMBODIMENTS]

According to a first aspect of the present disclosure, an image processing apparatus is provided with: an image input unit, a first determination unit, a second determination unit, an image generation unit, and an image output unit. The image input unit obtains an input image including visualized data. The first determination unit classifies the input image into one of a plurality of classes to obtain a classification result. The second determination unit determines a partial region of the input image, the partial region accounting for determining the classification result. The image generation unit highlights the partial region in the input image to generate an output image. The image output unit outputs the output image.

According to a second aspect of the present disclosure, the image processing apparatus of the first aspect is further configured as follows. The first determination unit is provided with a convolutional neural network including a plurality of convolution layers, the convolutional neural network being trained using machine learning to classify the input image into the plurality of classes. The second determination unit determines the partial region based on data of a last convolution layer of the convolutional neural network.

According to a third aspect of the present disclosure, the image processing apparatus of the first aspect is further configured as follows. The image processing apparatus is further provided with a communication unit that communicates with a first external apparatus. The first external apparatus includes a server apparatus provided with a convolutional neural network including a plurality of convolution layers, the convolutional neural network being trained using machine learning to classify the input image into the plurality of classes. The first determination unit sends the input image to the server apparatus, and obtains the classification result from the server apparatus. The second determination unit obtains data of a last convolution layer of the convolutional neural network from the server apparatus, and determines the partial region based on the data of the last convolution layer of the convolutional neural network.

According to a fourth aspect of the present disclosure, the image processing apparatus of any one of the first to third aspects is further configured as follows. The visualized data includes data visually representing numerical information.

According to a fifth aspect of the present disclosure, the image processing apparatus of any one of the first to fourth aspects is further configured as follows. The visualized data includes information indicating conditions of a site including a manufacturing site or a distribution site.

According to a sixth aspect of the present disclosure, the image processing apparatus of any one of the first to fifth aspects is further configured as follows. The visualized data includes a graph representing temporal variations in operation conditions of a machine.

According to a seventh aspect of the present disclosure, the image processing apparatus of any one of the first to sixth aspects is further configured as follows. The visualized data includes a graph representing temporal variations in a yield of a product.

According to an eighth aspect of the present disclosure, the image processing apparatus of any one of the first to seventh aspects is further configured as follows. The visualized data includes a graph representing temporal variations in a location of a person or an object.

According to a ninth aspect of the present disclosure, the image processing apparatus of any one of the first to eighth aspects is further configured as follows. The visualized data includes a graph representing a stay time of a person or an object per location.

According to a tenth aspect of the present disclosure, the image processing apparatus of any one of the first to ninth aspects is further configured as follows. The plurality of classes includes a normal state and an abnormal state, or includes a normal state and a plurality of abnormal states, the plurality of abnormal states being of different levels from each other.

According to an eleventh aspect of the present disclosure, the image processing apparatus of any one of the first to tenth aspects is further configured as follows. The image input unit obtains a measured value from a sensor, and generates the input image including the visualized data based on the measured value.

According to a twelfth aspect of the present disclosure, the image processing apparatus of any one of the first to eleventh aspects is further configured as follows. The image output unit outputs the classification result.

According to a thirteenth aspect of the present disclosure, the image processing apparatus of any one of the first to twelfth aspects is further configured as follows. The image processing apparatus is further provided with a communication unit that communicates with a second external apparatus. The first determination unit generates an alert signal based on the classification result. The communication unit transmits the alert signal to the second external apparatus.

According to a fourteenth aspect of the present disclosure, an image processing apparatus is provided with: a data input unit, a first determination unit, a second determination unit, an image generation unit, and an image output unit. The data input unit obtains input data including numerical data. The first determination unit classifies the input data into one of a plurality of classes to obtain a classification result. The second determination unit determines a partial element of the input data, the partial element accounting for determining the classification result. The image generation unit converts the input data into visualized data, and generates an output image including the visualized data, the classification result, and the partial element. The image output unit outputs the output image.

According to a fifteenth aspect of the present disclosure, the image processing apparatus of the fourteenth aspect is further configured as follows. The numerical data includes information indicating conditions of a manufacturing site including a plurality of processes. The plurality of classes includes whether or not each process is in a bottleneck state.

According to a sixteenth aspect of the present disclosure, the image processing apparatus of the fifteenth aspect is further configured as follows. The information indicating the conditions of the manufacturing site includes a start time and an end time of work of each of the processes. The first determination unit determines whether or not the first process is in the bottleneck state, based on start times and end times of a first process, a second process preceding the first process, and a third process following the first process, among the plurality of processes.

According to a seventeenth aspect of the present disclosure, the image processing apparatus of any one of the fourteenth to sixteenth aspects is further configured as follows. The image processing apparatus is further provided with a communication unit that communicates with an external apparatus. The first determination unit generates an alert signal based on the classification result. The communication unit transmits the alert signal to the external apparatus.

According to an eighteenth aspect of the present disclosure, an image processing method is provided for processing an input image including visualized data by a computer. The image processing method includes: obtaining the input image; classifying the input image into one of a plurality of classes to obtain a classification result; determining a partial region of the input image, the partial region accounting for determining the classification result; highlighting the partial region in the input image to generate an output image; and outputting the output image.

According to a nineteenth aspect of the present disclosure, a program including instructions executed by a processor implemented in a computer is provided. The computer processes an input image including visualized data. The instructions causing the processor to: obtain the input image; classify the input image into one of a plurality of classes to obtain a classification result; determine a partial region of the input image, the partial region accounting for determining the classification result; highlight the partial region in the input image to generate an output image; and output the output image.

INDUSTRIAL APPLICABILITY

The image processing apparatus according to the present disclosure can be applied to business intelligence tools that analyze visualized data, for the purpose of work improvement or the like.

REFERENCE SIGNS LIST

1, 1A, 1C: image processing apparatus
2: communication line
3: manufacturing apparatus
4: sensor
5: server apparatus
6: terminal apparatus
10: bus
11, 11A, 11B, 11C: processor
12: memory
13: storage device
14: communication device
15: input device
16: display device
21: image input unit
22, 22A: determination unit (class)
23: determination unit (basis of classification)
24: image generation unit
21B: data input unit
22B: determination unit (bottleneck)
23B: determination unit (basis of classification)
24B: image generation unit
31-1-1 to 31-N-M: node
32-1 to 32-N: layer
41: first convolution layer
42: first activation layer
43: first pooling layer
44: second convolution layer
45: second activation layer
46: second pooling layer
47: fully connected layer
48: output layer
51: input image
52: reference data
53: heat map
54: deformed heat map
55: output image
56: alert
61: input image
62: output image
63, 64: highlight
65: alert
71: input image
72: output image
73: highlight

74: alert
81: input image
82: output image
83, 84: highlight
85: alert
91: determination unit (class)

**Claims**

1.  An image processing apparatus comprising:

    an image input unit that obtains an input image including visualized data;
    a first determination unit that classifies the input image into one of a plurality of classes to obtain a classification result;
    a second determination unit that determines a partial region of the input image, the partial region accounting for determining the classification result;
    an image generation unit that highlights the partial region in the input image to generate an output image; and
    an image output unit that outputs the output image.

2.  The image processing apparatus according to claim 1,

    wherein the first determination unit comprises a convolutional neural network including a plurality of convolution layers, the convolutional neural network being trained using machine learning to classify the input image into the plurality of classes, and
    wherein the second determination unit determines the partial region based on data of a last convolution layer of the convolutional neural network.

3.  The image processing apparatus according to claim 1, further comprising a communication unit that communicates with a first external apparatus,

    wherein the first external apparatus includes a server apparatus comprising a convolutional neural network including a plurality of convolution layers, the convolutional neural network being trained using machine learning to classify the input image into the plurality of classes,
    wherein the first determination unit sends the input image to the server apparatus, and obtains the classification result from the server apparatus, and
    wherein the second determination unit obtains data of a last convolution layer of the convolutional neural network from the server apparatus, and determines the partial region based on the data of the last convolution layer of the convolutional neural network.

4.  The image processing apparatus according to any one of claims 1 to 3,
    wherein the visualized data includes data visually representing numerical information.

5.  The image processing apparatus according to any one of claims 1 to 3,
    wherein the visualized data includes information indicating conditions of a site including a manufacturing site or a distribution site.

6.  The image processing apparatus according to any one of claims 1 to 3,
    wherein the visualized data includes a graph representing temporal variations in operation conditions of a machine.

7.  The image processing apparatus according to any one of claims 1 to 3,
    wherein the visualized data includes a graph representing temporal variations in a yield of a product.

8.  The image processing apparatus according to any one of claims 1 to 3,
    wherein the visualized data includes a graph representing temporal variations in a location of a person or an object.

9.  The image processing apparatus according to any one of claims 1 to 3,
    wherein the visualized data includes a graph representing one of a stay time of a person or an object per location.

10. The image processing apparatus according to any one of claims 1 to 3,
    wherein the plurality of classes includes a normal state and an abnormal state, or includes a normal state and a plurality of abnormal states, the plurality of abnormal states being of different levels from each other.

11. The image processing apparatus according to any one of claims 1 to 3,
    wherein the image input unit obtains a measured value from a sensor, and generates the input image including the visualized data based on the measured value.

12. The image processing apparatus according to any one of claims 1 to 3,
    wherein the image output unit outputs the classification result.

**13.** The image processing apparatus according to any one of claims 1 to 3, further comprising a communication unit that communicates with a second external apparatus,

wherein the first determination unit generates an alert signal based on the classification result, and
wherein the communication unit transmits the alert signal to the second external apparatus.

**14.** An image processing apparatus comprising:

a data input unit that obtains input data including numerical data;
a first determination unit that classifies the input data into one of a plurality of classes to obtain a classification result;
a second determination unit that determines a partial element of the input data, the partial element accounting for determining the classification result;
an image generation unit that converts the input data into visualized data, and generates an output image including the visualized data, the classification result, and the partial element; and
an image output unit that outputs the output image.

**15.** The image processing apparatus according to claim 14,

wherein the numerical data includes information indicating conditions of a manufacturing site including a plurality of processes, and
wherein the plurality of classes includes whether or not each process is in a bottleneck state.

**16.** The image processing apparatus according to claim 15,

wherein the information indicating the conditions of the manufacturing site includes a start time and an end time of work of each of the processes, and
wherein the first determination unit determines whether or not the first process is in the bottleneck state, based on start times and end times of a first process, a second process preceding the first process, and a third process following the first process, among the plurality of processes.

**17.** The image processing apparatus according to any one of claims 14 to 16, further comprising a communication unit that communicates with an external apparatus,

wherein the first determination unit generates an alert signal based on the classification result, and
wherein the communication unit transmits the alert signal to the external apparatus.

**18.** An image processing method for processing an input image including visualized data by a computer, the image processing method including:

obtaining the input image;
classifying the input image into one of a plurality of classes to obtain a classification result;
determining a partial region of the input image, the partial region accounting for determining the classification result;
highlighting the partial region in the input image to generate an output image; and
outputting the output image.

**19.** A program including instructions executed by a processor implemented in a computer, the computer processing an input image including visualized data, the instructions causing the processor to:

obtain the input image;
classify the input image into one of a plurality of classes to obtain a classification result;
determine a partial region of the input image, the partial region accounting for determining the classification result;
highlight the partial region in the input image to generate an output image; and
output the output image.

## FIG. 1

```
┌─────────────────────────────────────────────────────┐
│      11              12              16               │
│  ┌──────────┐   ┌──────────┐   ┌──────────┐          │──── 1
│  │PROCESSOR │   │  MEMORY  │   │ DISPLAY  │          │
│  │          │   │          │   │  DEVICE  │          │
│  └─────┬────┘   └─────┬────┘   └─────┬────┘          │
│ 10     │              │              │               │
│   ━━━━━●━━━━━━━━━━━━━━━●━━━━━━━━━━━━━━●━━━━━━━━━       │
│  ┌─────┴────┐   ┌─────┴────┐   ┌─────┴────┐          │
│  │ STORAGE  │   │   COMM.  │   │  INPUT   │          │
│  │  DEVICE  │   │  DEVICE  │   │  DEVICE  │          │
│  └──────────┘   └──────────┘   └──────────┘          │
│      13              14              15               │
└─────────────────────────────┬───────────────────────┘
                              ╱│╲
                         ┌────────────┐ ──── 2
                         │    ╲  ╱    │
                         │     ╲╱     │
                         │     ╱╲     │
                         └──────┬─────┘
                                │      4
                         ┌──────┴─────┐
                 ┌───────│────────────│──────────┐ ──── 3
                 │       └────────────┘          │
                 │  MANUFACTURING APPARATUS       │
                 └───────────────────────────────┘
```

*FIG. 2*

*FIG. 3*

*FIG. 4*

INPUT IMAGE → FIRST CONVOLUTION LAYER (41) → FIRST ACTIVATION LAYER (42) → FIRST POOLING LAYER (43) → SECOND CONVOLUTION LAYER (44) → SECOND ACTIVATION LAYER (45) → SECOND POOLING LAYER (46) → FULLY CONNECTED LAYER (47) → OUTPUT LAYER (48) → CLASSIFICATION RESULT

REFERENCE DATA (BASIS OF CLASSIFICATION)

EP 4 715 758 A1

*FIG. 5*

```
         ( IMAGE GENERATION PROCESS )
                      │
   S1    ┌──────────────────────────────────┐
         │ OBTAIN INPUT IMAGE INDICATING     │
         │ OPERATION CONDITIONS OF           │
         │ MANUFACTURING APPARATUS           │
         └──────────────────────────────────┘
                      │
   S2    ┌──────────────────────────────────┐
         │ DETERMINE WHETHER OR NOT          │
         │ ABNORMAL STATE OCCURS IN          │
         │ MANUFACTURING APPARATUS           │
         └──────────────────────────────────┘
                      │
   S3    ┌──────────────────────────────────┐
         │ OUTPUT DETERMINATION              │
         │ RESULT OF ABNORMAL STATE          │
         └──────────────────────────────────┘
                      │
   S4    ┌──────────────────────────────────┐
         │ OBTAIN REFERENCE DATA             │
         │ FROM LAST CONVOLUTION LAYER       │
         └──────────────────────────────────┘
                      │
   S5    ┌──────────────────────────────────┐
         │ GENERATE HEAT MAP                 │
         │ BASED ON REFERENCE DATA           │
         └──────────────────────────────────┘
                      │
   S6    ┌──────────────────────────────────┐
         │ RESIZE HEAT MAP                   │
         │ ACCORDING TO INPUT IMAGE          │
         └──────────────────────────────────┘
                      │
   S7    ┌──────────────────────────────────┐
         │ OVERLAY INPUT IMAGE WITH HEAT     │
         │ MAP TO OUTPUT OVERLAID IMAGE      │
         └──────────────────────────────────┘
                      │
                  (  END  )
```

FIG. 6

SETUP    CHANGEOVER  SETUP

NOT IN          NORMAL           EMERGENCY                              NOT IN
OPERATION      OPERATION          STOP                               OPERATION

51

PRESENCE OF WORKERS

FIG. 7

52

| 0 | 0 | 0 | 2 | 4 | 2 | 0 | 0 | 0 | 0 | 0 | 0 |
|---|---|---|---|---|---|---|---|---|---|---|---|
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |
| 0 | 0 | 0 | 2 | 4 | 2 | 0 | 0 | 0 | 0 | 0 | 0 |

FIG. 8

53

EP 4 715 758 A1

*FIG. 9*

54

*FIG. 10*

55

56

ABNORMALITY
OCCURS

## FIG. 11

61

YIELD OF
PRODUCT A

YIELD OF
PRODUCT B

YIELD OF PRODUCT C

## FIG. 12

62

YIELD OF
PRODUCT A

YIELD OF
PRODUCT B

65

ABNORMALITY
OCCURS

63    YIELD OF PRODUCT C    64

FIG. 13    71    CURRENT LOCATION OF
PERSON OR OBJECT

TRAJECTORY OF
PERSON OR OBJECT

FIG. 14    74                                    72

ABNORMALITY
OCCURS

73

*FIG. 15*  <u>81</u>

STAY TIME OF
PERSON OR OBJECT

*FIG. 16*  85  84  <u>82</u>

ABNORMALITY
OCCURS

83

FIG. 17

EP 4 715 758 A1

**FIG. 18**

**FIG. 19**

## FIG. 20

```
┌───────────┐
│ PROCESS 1 │
└───────────┘
      │
      ▼
┌───────────┐
│ BUFFER 2  │
└───────────┘
      │
      ▼
┌───────────┐
│ PROCESS 2 │
└───────────┘
      │
      ▼
┌───────────┐
│ BUFFER 2  │
└───────────┘
      │
      ▼
┌───────────┐
│ PROCESS 3 │
└───────────┘
      │
      ▼
┌───────────┐
│ BUFFER 3  │
└───────────┘
      │
      ▼
      ⋮
```

## FIG. 21

```
        ( IMAGE GENERATION PROCESS )
                    │
┌──────────────────────────────────────────┐
│      OBTAIN INPUT DATA INDICATING         │
S11    OPERATION CONDITIONS OF              │
│         MANUFACTURING SITE                │
└──────────────────────────────────────────┘
                    │
┌──────────────────────────────────────────┐
│            BOTTLENECK                     │
S12 │      DETECTION PROCESS            │    │
└──────────────────────────────────────────┘
                    │
┌──────────────────────────────────────────┐
│       GENERATE DATA INDICATING            │
S13    OPERATION CONDITIONS OF              │
│         MANUFACTURING SITE                │
└──────────────────────────────────────────┘
                    │
┌──────────────────────────────────────────┐
│    OVERLAY IMAGE WITH LOCATION            │
S14    AND BASIS OF BOTTLENECK              │
│    TO OUTPUT OVERLAID IMAGE               │
└──────────────────────────────────────────┘
                    │
              (    END    )
```

FIG. 22

EP 4 715 758 A1

# FIG. 23

FIG. 24

EP 4 715 758 A1

## FIG. 25

## FIG. 26

## INTERNATIONAL SEARCH REPORT

| International application No. |
|---|
| **PCT/JP2024/017002** |

**A.    CLASSIFICATION OF SUBJECT MATTER**

*G06Q 50/04*(2012.01)i; *G06Q 10/063*(2023.01)i; *G06T 7/00*(2017.01)i; *G06V 10/82*(2022.01)i
FI:    G06Q50/04; G06Q10/063; G06T7/00 350C; G06V10/82

According to International Patent Classification (IPC) or to both national classification and IPC

**B.    FIELDS SEARCHED**

Minimum documentation searched (classification system followed by classification symbols)

G06Q10/00-99/00; G06T7/00; G06V10/82

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-96541 A (TOYO SEIKAN GROUP HOLDINGS LTD.) 24 June 2021 (2021-06-24) paragraphs [0001], [0013]-[0037] | 1-19 |
| Y | JP 2023-30355 A (SEIKO EPSON CORPORATION) 08 March 2023 (2023-03-08) paragraphs [0008]-[0034] | 1-19 |
| Y | WO 2020/250498 A1 (OMRON CORPORATION) 17 December 2020 (2020-12-17) paragraphs [0011]-[0012], [0044] | 5-9, 13, 15-17 |
| Y | WO 2016/051464 A1 (KABUSHIKI KAISHA TOSHIBA) 07 April 2016 (2016-04-07) paragraphs [0009]-[0043] | 13, 17 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 June 2024** | **09 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/017002**

| Patent document cited in search report | | | Publication date (day/month/year) | Patent family member(s) | Publication date (day/month/year) |
|---|---|---|---|---|---|
| JP | 2021-96541 | A | 24 June 2021 | (Family: none) | |
| JP | 2023-30355 | A | 08 March 2023 | (Family: none) | |
| WO | 2020/250498 | A1 | 17 December 2020 | (Family: none) | |
| WO | 2016/051464 | A1 | 07 April 2016 | US 2018/0348741 A1 paragraphs [0008]-[0042] CN 106575115 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021009819 A1

- JP 6868981 B